# EUROPEAN PATENT SPECIFICATION

(11) **EP 2 409 432 B1**
(45) Date of publication and mention of the grant of the patent: **06.05.2020**
(21) Application number: 10708572.2
(22) Date of filing: 16.03.2010
(51) Int. Cl.: H04N 7/24, H04L 29/06, H04N 21/2343, H04N 21/236, H04N 21/2368, H04N 21/238, H04N 21/2381, H04N 21/242, H04N 21/2662, H04N 21/43, H04N 21/434, H04N 21/643, H04N 21/6437, H04N 21/8547

(54) **MODIFIED STREAM SYNCHRONIZATION**
MODIFIZIERTE STROMSYNCHRONISIERUNG
SYNCHRONISATION DE FLUX MODIFIÉ

(30) Priority: 16.03.2009 EP 09003751; 09.12.2009 EP 09015266
(43) Date of publication of application: 25.01.2012
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: STOKKING, Hans Maarten, 2292CH Wateringen (NL); WALRAVEN, Fabian Arthur, NL-9712 MD Groningen (NL); VAN DEVENTER, Mattijs Oskar, NL-2264 DL Leidschendam (NL); NIAMUT, Omar Aziz, NL-3131 HV Vlaardingen (NL)
(74) Representative: Wuyts, Koenraad Maria
(86) International application number: PCT/EP2010/053407
(87) International publication number: WO 2010/106075

(56) References cited:
- FRIEDMAN T ET AL: "RTP Control Protocol Extended Reports (RTCP XR); rfc3611.txt" IETF STANDARD, INTERNET ENGINEERING TASK FORCE, IETF, CH, 1 November 2003 (2003-11-01), XP015009393 ISSN: 0000-0003
- OSKAR VAN DEVENTER M ET AL: "Advanced interactive television services require content synchronization" SYSTEMS, SIGNALS AND IMAGE PROCESSING, 2008. IWSSIP 2008. 15TH INTERNATIONAL CONFERENCE ON, IEEE, PISCATAWAY, NJ, USA, 25 June 2008 (2008-06-25), pages 109-112, XP031310397 ISBN: 978-80-227-2856-0
- FERNANDO BORONAT SEGUÃ Â ET AL: "An RTP/RTCP based approach for multimedia group and inter-stream synchronization" MULTIMEDIA TOOLS AND APPLICATIONS, KLUWER ACADEMIC PUBLISHERS, BO LNKD- DOI:10.1007/S11042-008-0208-1, vol. 40, no. 2, 25 June 2008 (2008-06-25), pages 285-319, XP019647284 ISSN: 1573-7721
- SCHULZRINNE COLUMBIA UNIVERSITY S CASNER PACKET DESIGN R FREDERICK BLUE COAT SYSTEMS INC V JACOBSON PACKET DESIGN H: "RTP: A Transport Protocol for Real-Time Applications; rfc3550.txt" IETF STANDARD, INTERNET ENGINEERING TASK FORCE, IETF, CH, 1 July 2003 (2003-07-01), XP015009332 ISSN: 0000-0003
- CHRISTIAN BLUM: "Synchronization of Live Continuous Media Streams", PROCEEDINGS OF THE 4TH OPEN WORKSHOP ON HIGH-SPEED NETWORKS, BREST , 1 September 1994 (1994-09-01), pages 1-7, XP002542317, Retrieved from the Internet: URL:http://citeseerx.ist.psu.edu/viewdoc/d ownload?doi=10.1.1.47.7757&rep=rep1&type=p df [retrieved on 1994-09-01]
- "Telecommunications and Internet converged Services and Protocols for Advanced Networking (TISPAN); NGN integrated IPTV subsystem Architecture;Draft ETSI TS 182 028", ETSI DRAFT; DRAFT ETSI TS 182 028, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive - TISPAN, no. V3.1.3, 11 March 2009 (2009-03-11), pages 1-65, XP014194874, [retrieved on 2009-03-11]

## Description

### Field of the invention

The invention relates to a method and a system for inter-destination synchronization of related streams. The invention further relates to a synchronization unit, a synchronization point, an arrival time information adjustment module and a data structure for use in such system and to a computer program product using such method.

### Background of the invention

New multi-media techniques such as Voice over IP (VoIP) and Internet Protocol Television (IPTV) open a whole range of new multi-media services. One type of these services enable a group of users to separately watch the same TV channel and communicate with each other using text, audio and/or video. Another type of these services provide interactive television experiences, such as a broadcasted television quiz wherein viewers at home may input answers to broadcasted questions and participate in the show. Such services require that the output signal of the terminals is transmitted at the same time to all users in the group. In other words, the outputs of the display or play-out devices in the group e.g. televisions, PDAs, mobile devices, PCs or a combination thereof, corresponding to different destinations, should be synchronized.

In an IPTV system, the TV channel signal is typically transmitted as one or more packetized streams over a high-bandwidth IP network of an operator via network nodes such as head-ends, edge routers and access nodes to the terminals of the subscribers to such services. During transmission of the streams, the packets are subjected to unknown delays in the network such as transmission delays, differences in network routes and differences in coding and decoding delays. As a consequence the temporal relationship between packets of audio and video streams received at a first terminal (a first destination) and those received at another second terminal (a second destination) will be disturbed.

To stream the IPTV content to the terminals usually the Real-Time Transport Protocol (RTP) is used. RTP provides sequence numbering and time stamping. Using RTP the temporal relation in one stream (intra-stream synchronization), between associated streams terminating at the same end-terminal (inter-stream synchronization) or between associated streams terminating at different end-terminals (group-synchronization or inter-destination synchronization) may be restored. OSKAR VAN DEVENTER ET AL: "Advanced interactive television services require content synchronization", 15th international conference on systems, signals and image processing, 25 June 2008, XP031310397 provides architectural approaches to inter-destination content synchronization for IMS-based IPTV technology. The article "Multimedia group and inter-stream synchronization techniques: A comparative study" by F. Boronat et al. (Elsevier Information Systems 34 (2009) pp. 108-131) provides a comprehensive overview of known inter-destination synchronization techniques, which may be sub-divided in three main categories.

In the "Synchronization Maestro Scheme" (SMS), a central synchronization master collects timing information from all terminals in the group and adjusts the output timing by distributing control packets to the terminals. In the "Master-Slave Receiver Scheme" (MSRS), receivers (terminals) are classified into a master receiver and slave receivers. The master receiver multi-casts its output timing to the slave receivers, which adjust their output timing of packets accordingly. In the "Distributed Control Scheme" (DCS), each terminal (receiver) multicasts all timing information to all other terminals in the group and terminal is configured for calculating the appropriate output timing. These schemes have in common that the synchronization takes place either at the source or receiving end of a media stream.

Most of the referenced inter-destination synchronization techniques make use of timing information (e.g. an RTP Time Stamp, the RTP Sequence Number of the received RTP media stream at a specific instance in time, or one or more equivalent parameters in a Transport Stream) on media stream reception at the terminals. By comparing timing information of different receivers, appropriate stream adjustments may be calculated. An exemplary adjustment may be a delay of the play-out time of the received stream by using a buffer at the receiver-end.

One problem related to these known synchronization schemes is that these schemes are not designed to deal with situations wherein the stream between the source and the receiver is modified for content preparation and/or content re-generation purposes.

Modification of a stream may be necessary and/or advantageous in a large number of situations. For example, to prepare a media stream for efficient delivery, media streams may be adjusted for specific requirements of the stream receivers or access lines such as a change in resolution (for example when n converting from HD to SD or converting to lower bit rate). In such situation a stream modification unit called a translator or transcoder may be placed in the path of the stream. The modified transcoder output stream may comprise different time stamps, sequence numbers or other timing information when compared with the original (unmodified) input stream.

Media streams may also be customized for specific customer requirements. Adding voice-overs, subtitles, Picture in Picture, to the main content stream may be needed. This is typically done by a stream modification unit called a mixer. Further, a stream may need to be re-generated when crossing network domains using a re-generator unit. All these content preparation and regeneration schemes may change the timing information in the stream thereby rendering known inter-destination synchronization schemes unreliable or even impossible to use. Hence, there is a need in the prior art for methods and systems which enable inter-destination synchronization between modified and unmodified streams or between two differently modified streams.

### Summary of the invention

It is an object of the invention to reduce or eliminate at least one of the drawbacks of synchronization schemes known in the prior art and to provide a method for inter-destination synchronization of at least a first and a second stream wherein said second stream is the output stream of a media stream modification unit using the first stream as an input stream.

The invention is defined by independent claims 1, 11, 14, 15 and 16.

By providing synchronization correlation information, related streams directed to a heterogeneous set of viewers, using different terminals, and or with different service requirements, may still be synchronized. The invention thus allows groups of viewers in a heterogeneous network to watch a media stream in a synchronized way.

Arrival time in this context is normally the time a synchronization point receives a particular part of a media stream. In the context of this invention, it is understood by anyone skilled in the art, that it is not necessary to use the exact packet arrival time here. The actual time used as arrival time information can vary slightly, depending on the precise point a synchronization point uses for determining arrival time. This may e.g. be directly upon arriving, before placing a packet in a jitter buffer. But it may also be in a point later in the process of handling the media packets, e.g right before the decoding process or right before a translation process. A synchronization point may even be aware of the time necessary for processing a media packet up until the actual presentation of that particular part of the media content, and use the actual presentation time as arrival time information.

The invention will be further illustrated with reference to the attached drawings, which schematically show embodiments according to the invention. It will be understood that the invention is not in any way restricted to these specific embodiments.

### Brief description of the drawings

**Fig. 1** depicts an exemplary embodiment of a heterogeneous network topology, comprising multiple stream modification units, and capable of delivering related streams to different locations.
**Fig. 2** depicts a system according to one embodiment of the invention.
**Fig. 3** depicts a flow diagram associated with a system according to the invention.
**Fig. 4** depicts a system according to another embodiment of the invention.
**Fig. 5** depicts an implementation of the inter-destination synchronization scheme according to one embodiment of the invention.
**Fig. 6** depicts an exemplary RTCP eXtended Report according to one embodiment of the invention.
**Fig. 7** depicts the use of RTCP messages for synchronizing media stream according another embodiment of the invention.

### Detailed description

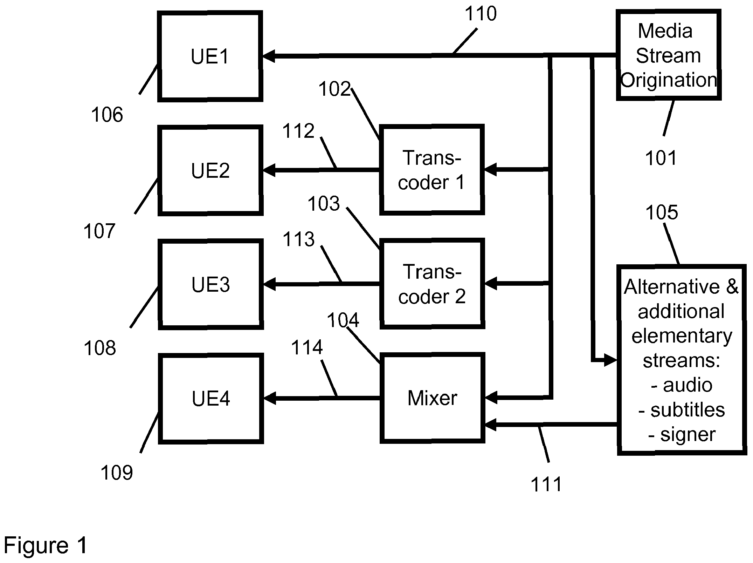

**Fig. 1** depicts an exemplary embodiment of a multimedia delivery system **100** for delivering content to user equipments over a network. The network has a heterogeneous topology, comprising multiple stream modification modules and is capable of delivering related streams to different locations. In this embodiment a media stream comprising packets is delivered to multiple user equipments wherein the media stream is adapted differently for different user equipments.

A packet in the context of this application is a piece (i.e. a unit) of a media stream which is associated with timing information, e.g. time stamps. One example of such packets is an RTP packet comprising one or more timestamps. Another example is an MPEG-type packet, such as a Transport Stream (TS) packet comprising one or more presentation time stamps.

A skilled person will understand that any media packet format comprising timing information may be used for synchronization purposes. The timing information may be part of the transport container (the transport protocol), which is used for transporting the content, either standardized or proprietary. Alternatively or in addition it may also be part of the actual content, e.g. timing information used in the encoding scheme for encoding the content.

The multimedia delivery system in **Fig. 1** comprises a media stream origination **101**, e.g. a server capable of delivering media streams via one or more networks, e.g. an IP network, to different user equipments (UE) **106-109.** A UE or a terminal may relate a play-out device or a device connected to one (e.g. a set-top box). Such devices may for instance include a mobile phone, television set, IP-phone, game console, smart metering device, etc., but it may also be any other automated action in response to a synchronized stream, such as the automated metering of a multiple metering devices in response to a synchronized signal.

The multimedia delivery system may comprise various network elements, which perform certain actions on a media stream so that the timing information in the stream is modified. Such a network element hereafter is generally referred to a stream modification unit. In the embodiment of **Fig. 1**, the system comprises various stream modification units, e.g. a first transcoder **102**, a second transcoder **103**, and a mixer **104**. A server **105** may deliver alternative and/or additional elementary streams **105** to the mixer. This server **105** may for example deliver alternative audio (different languages, director's comments or surround sound), alternative subtitles, or alternative video (e.g. a signer that translates spoken language to sign language).

The original media stream **110** delivered by the media server **101** may be a video on demand (VoD) stream with MPEG4 encoding transported over the network using RTP over UDP over IP. This original media stream **110** is modified (i.e. transcoded) by the first transcoder **102** transcoding the original MPEG4 encoded stream into an MPEG2 encoded stream for the benefit of UE2 **107**, which only supports MPEG2 encoding. The transcoded media stream **112** is further transported to UE2 using RTP over UDP over IP.

The second transcoder **103** may transcode the original media stream **110** to a modified media stream having a container format different from the container format used by the original media stream whereby the actual encoding scheme is not changed. Second transcoder **103** may for example deliver the media stream encoded in MPEG4 over the network to UE3 **108** using an MPEG Transport Stream carried directly over UDP. Further, mixer **104** may add one or more additional elementary streams to the original media stream or may replace one or more elementary media streams in the original media stream with one or more alternative elementary streams. These additional or alternative elementary streams are delivered by server **105** using RTP over UDP over IP. The mixer **104** subsequently delivers the mixed media stream **114** to UE4 using MPEG4 over RTP over UDP over IP.

In the multimedia delivery system as depicted in **Fig. 1**, the original media stream **110** may use a transport protocol comprising timing information. In one embodiment, the RTP protocol may be used as a transport mechanism. RTP uses RTP timestamps which may be used as timing information for synchronizing media streams.

The first transcoder **102** may decode the original stream **110**, and re-encode the media (e.g. from MPEG4 to MPEG2). Hence, it will send out a modified media stream using a random RTP timestamp to indicate the start of its transmission to UE2 **107.** The timestamp of the outgoing media stream thus differs from the incoming media stream even though the same transport protocols are used (RTP over UDP over IP).

The second transcoder **103** does not decode the original stream **110**, but sends the media stream **113** to UE3 **108** using a different transport container. For example, an MPEG Transport Stream (TS) over UDP is used to send the content to UE3. These MPEG TS packets may contain timing information in the form of so-called Presentation Time Stamps (PTS) for indicating the instance at which a packet should be presented for display. These PTS are different from the RTP timestamps of the original media stream **110**, even though the actual encoding between incoming and outgoing media stream media remains unchanged.

The mixer **104** may mix one or more elementary streams in media stream **111** with the original media stream **110.** Thereafter, it may send the mixed media stream **114** over the network to UE4 **109.** As the mixer generates a new media stream it will use a new randomly generated RTP timestamp as the starting time for transmitting this stream to UE4 whereby both the encoding and transport schemes used for the input stream **110** and the mixed output stream **114** are the same.

Without any further measures, synchronization of the play-out at the UEs is not possible because the content modification units in the network change the timing information in the streams so that the timestamps at the source and UEs do not correlate with each other. The reason being that the media server **101**, the transcoders **102** and **103** and the mixer **104** each choose a random timestamp as a starting time. This same problem exists for the mixer: it receives media streams from both the original media server **101** and from another source, i.e. the media server containing additional and alternative elementary streams **105.** As explained above, the timestamps in these media streams will not be correlated.

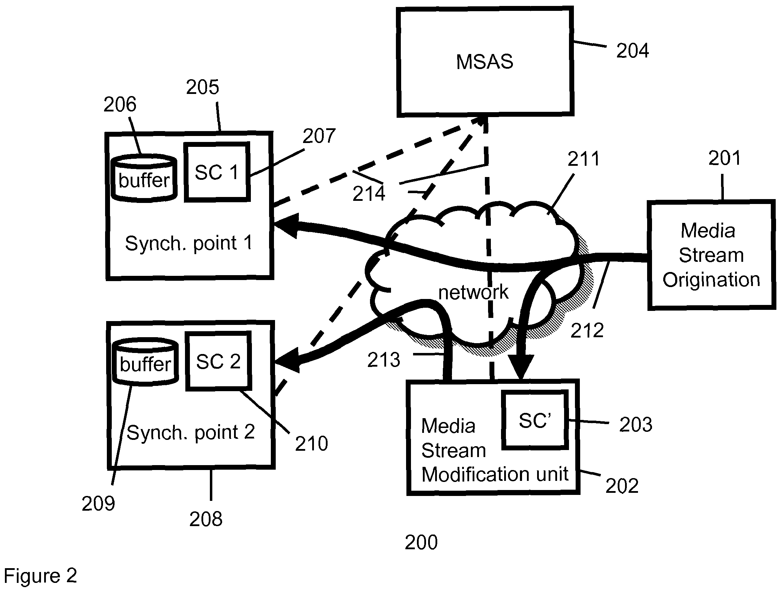

**Fig. 2** illustrates a schematic of a multi-media delivery system **200** comprising a first synchronization point **205** and a second synchronization point **208** for synchronizing a media stream. A synchronization point is a (logical or physical) point in the path of stream for which the synchronization information (e.g. the arrival time information) is determined. A synchronization point may be comprised in any physical device connected to or incorporated in a network. It may for instance relate to a network node, such as an access node (for example a Digital Subscriber Line Access Multiplexer (DSLAM), Cable Modem Termination System (CMTS)), an optical access node or an edge router or a head-end. Alternatively, a synchronization point may be configured as a set-top box connected to a television, a personal computer, laptop, net-book, personal digital assistant or any other device capable of handling the media stream.

The multi-media delivery system may contain a media stream origination **201**, e.g. a media server, delivering e.g. a video-on-demand stream or a live multicast television broadcast. This media origination **201** may transmit an original first media stream **212** over the network **211** to the synchronization points. The first synchronization point **205** may receive the original media stream **212** without any modifications. The second synchronization point **208** however may receive a stream comprising the same content but e.g. in a different format. Hence, the second synchronization point **208** receives a modified second media stream **213** generated by a media stream modification unit **202**, which receives the original media stream **212** and generates modified media stream **213.**

The first and second stream synchronization points **205,208** may be configured to provide inter-destination synchronization (or group synchronization) between the first and second media streams **212**, **213** respectively. To that end, the media stream synchronization points are connected to a media synchronization unit **204**, e.g. a media synchronization application server (MSAS). The first and second stream synchronization points **205,208** may comprise first and second synchronization clients **207**,**210** and first and second variable delay unit each comprising e.g. a variable delay buffer **206**, **209** respectively. The first and second synchronization clients **207**,**210** are configured for exchanging synchronization information with the MSAS **204** as explained in more detail below.

The media stream modification unit **202** may further comprise a third synchronization client SC' **203** associated with the media stream modification unit. The synchronization clients **207**,**210**,**203** exchange messages with the MSAS **204** using e.g. signaling paths **214.** These signaling messages may be transported over the same network **211** used in media distribution. Alternatively, the messages may be transported over other networks as well. For the explanation below signaling paths **214** are referred to as synchronization reference points.

In this example, the original media stream **212** may for example relate to a video stream carried in RTP over an IP network using the UDP protocol. In that case, the RTP packets in the original media stream **212** may contain an RTP timestamp generated by the media stream origination **201** and a synchronization source (SSRC) identifier as defined in the RTP protocol..

The modified stream **213** may contain the same content as the original media stream **212** but is modified by the media stream modification unit **202.** The modification may be a modification operation as described above with reference to **Fig. 1****.**, e.g. the original stream may be a high-bandwidth High Definition (HD) stream and the modified stream may be a low-bandwidth Standard Definition (SD) stream. Another modification may e.g. be the application of an encryption scheme associated with a Digital Rights Management (DRM) system supported by one or more stream synchronization points in the network. The modification may also relate to re-origination. Re-origination may be provided when media streams cross network boundaries, e.g. when an IPTV provider wants to offer media streams available on the Internet also to one or more of its private IPTV networks. Other modifications may include modifications based on mixing, e.g. including a person performing sign language in the video stream, or resending the streams in a different media container, e.g. using an MPEG Transport Stream (TS) instead of using RTP.

The RTP packets in the modified media stream 213 may contain a different SSRC identifier and different RTP timestamps compared to those in the original media stream 212. According the IETF RFC 3550, the SSRC identifier and the RTP timestamp are 32 bit header fields in a RTP packet. For each media stream the starting time of an RTP time stamp should be chosen randomly. Further, the SSRC is a randomly chosen value, which is meant to be globally unique. In known inter-destination synchronization schemes, synchronization may be achieved by signaling timestamp information to each stream synchronization point. However, as the RTP timestamps in the first and second streams **212**, **213** are different, direct synchronization of the media streams at first and second synchronization points is not possible.

In the multi-media delivery system the first and second stream synchronization points **205**, **208** may send so-called synchronization status information to the MSAS **204.** This synchronization status information may contain the identification information associated with the media stream (e.g. an SSRC identifier), and the timing information (e.g. an RTP timestamp and an NTP timestamp associated with the play-out time of a packet).

The RTP timestamp reflects the sampling instant of the first octet in the RTP data packet. The initial value of the timestamp is a random value. The RTP timestamp counts sampling periods so if a second RTP packet starts 160 samples after a first RTP packet, then the second RTP time stamp is 160 higher than the first.

The NTP timestamp is an absolute "wall clock" time. NTP is a 64-bit counter of which started 1 January 1900 as defined in IETF RFC 1305. The 64-bit timestamps used by NTP consist of a 32-bit seconds part and a 32-bit fractional second part. It represents the absolute time that the first octet, identified by the RTP timestamp, passes a specific point, i.e. a synchronization point.

This specific point may be the play-out point of the User Equipment (UE) that contains the SC wherein the NTP timestamp represents the time that the specified octet is played to the user. Alternatively, it may be the ingress point, at which a SC first receives a specified octet. In a similar way, for a synchronization SC' this specific point may be an output point or an input point.

The first stream synchronization point may send the following first synchronization status information message to the MSAS:
SSRC identifier = 12345678
RTP timestamp = 1556688423
NTP timestamp = 13:42:21.000

Similarly, the second media stream synchronization point may send the following second synchronization status information message to the MSAS:
SSRC identifier = 90ABCDEF
RTP timestamp = 1684654845
NTP timestamp = 13:42:21.000

In this example, the information from the first and second stream synchronization points is associated with the same NTP play-out time: 13:42:21.000. In this example, it is assumed that both media stream synchronization points are NTP synchronized, i.e. their clocks are synchronized using the Network Time Protocol or some other means.

As explained above, although the modified media stream carries the same content, synchronization may not be possible due the media stream modification unit **202** modifying the timing information in the modified output stream **213.** In order to enable synchronization, the synchronization client SC' associated with the media stream modification unit **202** may send a synchronization correlation information message on the synchronicity relationship between an incoming media stream **212**, received by the media stream modification unit, and outgoing media stream **213**, transmitted by the media stream modification unit to the second media stream synchronization point. Hence, the synchronicity relationship relates to first timing information in a first packet and second timing information in a second packet, wherein the first and second packet comprise the same content or a part thereof and wherein said second packet is part of a stream modified by the media stream modification unit and wherein said first packet is part of a media stream prior to said modification.

In one embodiment, the media stream modification unit may send the following information to the MSAS:
incoming:
   SSRC identifier = 12345678
   RTP timestamp = 1556688423
outgoing:
   SSRC identifier = 90ABCDEF
   RTP timestamp = 1684657845

This information contains both an incoming SSRC identifier/ RTP timestamp pair and an outgoing SSRC identifier/RTP timestamp pair. Hence, the synchronization correlation information message may allow correlation of one or more streams received at the input of the stream modification unit with one or more streams transmitted at the output of a stream modification unit using the SSRC and/or the RTP timestamps signaled to the MSAS.

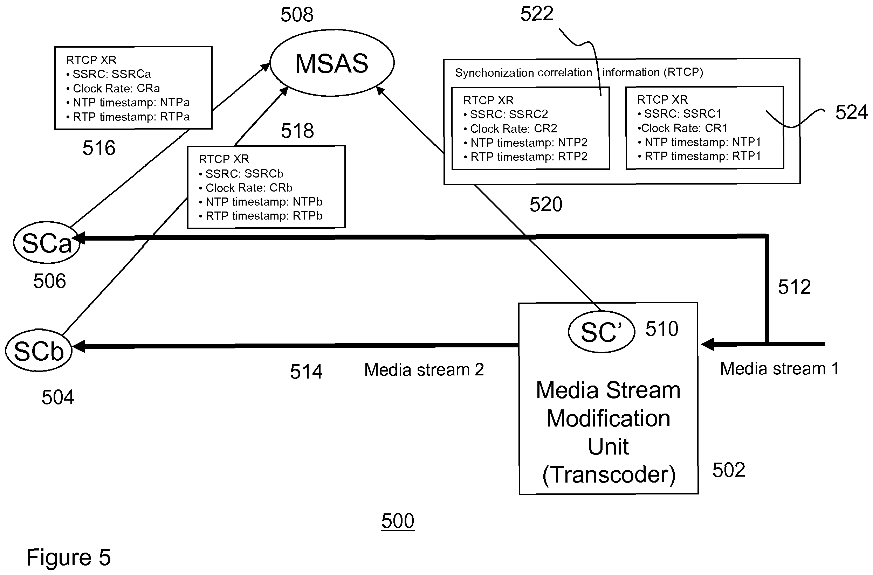

In one embodiment the synchronization correlation information may be sent in one message to the MSAS. In another embodiment it may be sent in two separate messages. The use of separate messages may be advantageous if the synchronization parameters of either the ingoing or the outgoing stream(s) do no vary much over time so that signaling of synchronization information associated with these streams is required less frequently. Further details about the signaling of the synchronization information is described hereunder with reference to **Fig. 5-7****.**

The MSAS **204** receives the first and second synchronization status information messages from both media stream synchronization points and the synchronization correlation information message containing the synchronicity relationship from the media stream modification unit. Thereafter, it uses this information to calculate timing information for the first and second media stream synchronization points.

This calculation may involve two calculation steps. The first step relates to a calculation to adjust all synchronization status information to a single timeline (time base). In the second step, the actual delay information is calculated. In the example below, it is assumed that both RTP timestamps represent a millisecond scale. If this is not the case, calculations should be adjusted to reflect this. So in a first step, all synchronization status information is adjusted to one common timeline, e.g. to the timeline associated with the RTP timestamps of the original media stream **212.** This step is referred to as the status information conversion step.

At 13:42:21.000, the first media stream synchronization point **205** is at timestamp 1556688423. In this example, that the timestamp provided by the second media stream synchronization point **208** will be adjusted to the timeline associated with the original media stream **212.** In other variants, it may also be possible to adjust the synchronization status information on the basis of a timeline associated with the modified stream or to adjust the timelines of both streams to a new (third) timeline. An example of a third timeline may relate to a situation wherein each media stream starts at timestamp 0 so that the first randomly chosen timestamp of each stream require adjustment to 0.

To adjust the synchronization status information received from the second media synchronization point **208**, the following information is used:
- RTP timestamp in the synchronization status information of the modified stream having a value 1684654845; and,
- RTP timestamp value 1684657845 associated with the modified stream correlates with RTP timestamp value 1556688423 associated with the original stream.

The calculation for adjusting the timestamp may relate to a simple linear transformation: adjusted timestamp = conv_timestamp_org_stream + conv_timestamp_mod_stream - timestamp_mod_stream_current. Hence, at 13:42:21.000 the second media stream synchronization point **208** may be associated with adjusted timestamp 1556688423 + 1684654845 - 1684657845 = 1556685423. That way, the synchronization status information received from the second media stream synchronization point **208** may be adjusted to the timeline associated with the synchronization status information received from the first media stream synchronization point **205.**

Thereafter the calculation of the delay information may be performed according to known schemes. For example, the delay information may be determined on the basis of the client which is most behind in playing the media stream. Since both timestamps in the example described above are reported at the same clock-time 13:42:21.000, the calculation may involve a simple subtraction of the synchronization status information of both media stream synchronization points: 1556685423 - 1556688423 = -3000. This result indicates that the media stream at the second media stream synchronization point **208** is 3 seconds behind on the media stream at the first media stream synchronization point **205.** This time-lag may be attributed to a transcoding process executed in the media stream modification unit **202.** If the reported clock-time (i.e. the NTP time) differs in the different synchronization status information messages received by the MSAS, this clock-time difference should be taken into account in the calculation for determining the delay.

From the above it follows that the modified stream is 3 seconds behind (as shown by the 4th digit from the right in the timestamp). In another embodiment, the timeline of the adjusted media stream may be used: 1684657845 ms - 1684654845 ms = 3000 ms. Hence, to synchronize the media streams at both media stream synchronization points, the MSAS may send synchronization setting instructions to the first synchronization point **205** to delay play-out by 3 seconds.

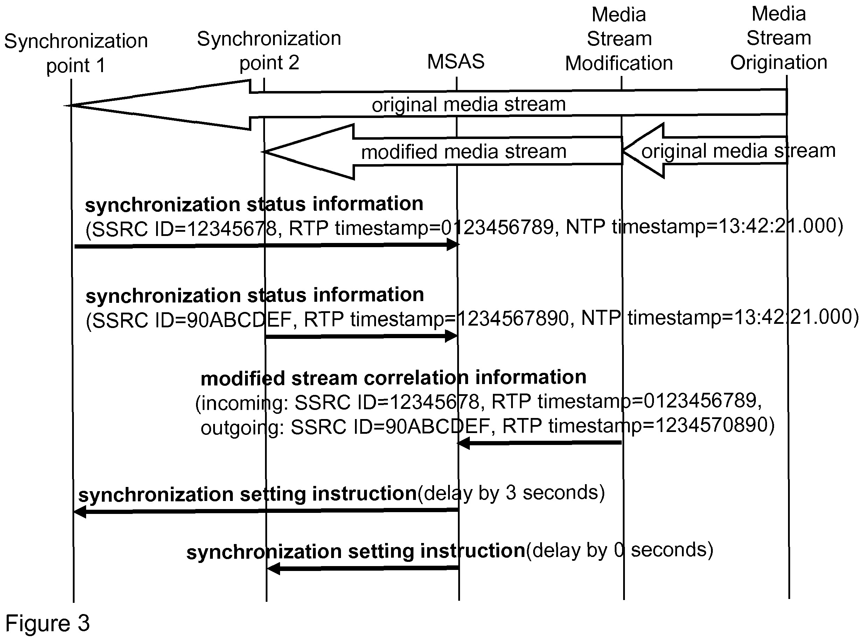

**Fig. 3** depicts the exchange of information in a message flow diagram **300** for the example as described above with reference to **Fig. 2****.** In a first step **302**, the first synchronization point receives the original media stream from the media stream origination and the second synchronization point receives a modified media stream from the output of the media stream modification unit, wherein the media stream modification unit uses the original media stream from the media stream origination as its input signal.

In a second and third step **304**, **306**, the first and second synchronization points each send a first and second synchronization status information message respectively to the media synchronization application server (MSAS). Thereafter, in a fourth step **308**, the media stream modification unit sends a correlation information message on the synchronicity relationship between the incoming media stream and outgoing media stream to the MSAS. The MSAS may subsequently calculate in a fifth step **310** synchronization setting instructions and send these instructions to the destinations, i.e. first and second synchronization points.

The non-limiting example described with reference to **Fig. 2** and **Fig. 3** illustrates an inter-destination synchronization scheme using one media stream modification unit and two synchronization points. In further variants, such scheme may be used with two or more stream modification units and/or with two or more media synchronization points. Different protocols may be used for transporting the signaling messages (e.g. the synchronization status information messages, the messages containing the information correlating the different timestamps, the synchronization settings instructions) over the network. These messages may for example be carried in XML format using SOAP over HTTP (W3C recommendation), in XML format or in plain text in a MIME message body in a SIP message (IETF RFC 3261) or in RTCP messages.

In the example described with reference to **Fig. 2** and **3**, the variable delay unit and the synchronization unit are implemented in a client-server type model wherein the functionality of the variable delay unit in a synchronization point may be implemented as part of a synchronization client (SC) and wherein the synchronization unit may be implemented as a synchronization server (SYNCHS or Media Synchronization Application Server (MSAS)). The synchronization client may have a protocol socket enabling synchronization status information to be sent using a suitable protocol to the synchronization server (synchronization unit) and synchronization settings instructions to be received from the synchronization server.

Synchronization status information may include timing information on stream reception (i.e. the arrival time of a packet in a stream arriving at a first synchronization point) and may include the current delay settings. Hence, the synchronization status information may comprise information regarding a point in time at which a packet in the stream was received by the synchronization point. Synchronization settings instructions may include instructions on setting the variable delay buffer using for example the actual calculated delay.

The terms synchronization settings instructions and delay instructions are terms used in an equivalent manner for the purpose of this invention and may comprise the actual delay time of a certain media stream. Preferably, these delay instructions may contain a positive time value associated with delaying a media stream for a predetermined duration. Alternatively, the delay instructions may contain a negative time value associated with speeding up the play-out or output of a media stream. This may be the case, when a certain synchronization point contains a large buffer and allows shortening of the delay by decreasing the buffering time using known measures.

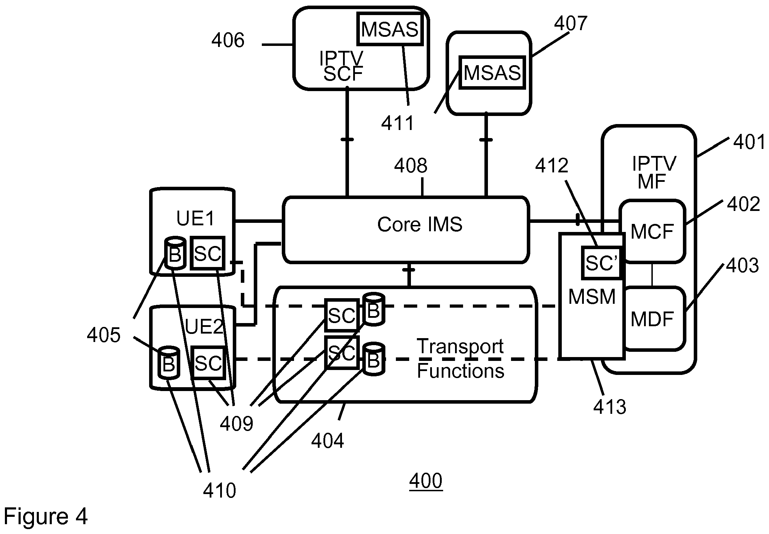

**Fig. 4** depicts an exemplary content delivery system according to the invention implemented as an IMS-based IPTV system **400** as specified in ETSI TS 182 027 version 2.0.0. The IPTV system **400** comprises an IPTV Media Function (MF) **401**, containing a Media Control Function (MCF) **402** and a Media Delivery Function (MDF) **403.** Further, it comprises Transport Functions (TF) **404**, User Equipments (UE) **405**, an IPTV Service Control Function (SCF) **406**, a separate application server (AS) **407** and a core IMS network (Core) **408.** A Synchronization Client (SC) **409** may be part of an UE **405** or be part of the Transport Functions **404.** If a User Equipment is capable of buffering a stream as part of the synchronization method, the SC may be implemented in the User Equipment. SCs may also be implemented in the transport network for example when the User Equipment does not support a buffering function.
The SC is associated with at least one variable delay buffer, hence when an SC is implemented in a UE, it may also comprise one or more associated variable delay buffers **410.** Similarly, if the SC is implemented as part of the Transport Function, the element comprising the Transport Function may also comprise one or more variable delay buffers **410.** The functionality of the MSAS **411** may be included in a standard IPTV Service Control Function **406**, as part of the Transport function or the Media Function or, alternatively, it may be implemented on a stand-alone application server **407.** A Media Stream Modification Unit (MSMU) **413** may be part of the IPTV Media Function **401.** The MDF **403** may perform the actual transcoding, while the MCF **402** may contain the synchronization client (SC') **412.**

**Fig. 5** depicts an implementation of the inter-destination synchronization scheme **500** according to one embodiment of the invention wherein RTCP RTP Control Protocol (RTCP) is used to convey synchronization information between elements in a media distribution system. The system comprises two synchronization clients SCa,SCb **502**,**504.** The synchronization clients are set up to signal synchronization status information associated with a first and second media stream **512**,**514** to an MSAS **508.** The two synchronization clients reside in two User Equipments (UEs) (not shown) that receive the two different RTP media streams, which may have different sampling rates. A first media stream **512** received by SCa, may be an original media stream associated with a media stream origination (i.e. a media server) and a second media stream **514** received by SCb, may be a modified media stream. A media stream modification unit (transcoder) **502**, which modifies the first media stream in to the second media stream, comprises a special Synchronisation Client SC' **510** that reports the synchronization relationship between the first and second media stream to the MSAS.

The system may use SIP to set-up media sessions between the UEs, the media stream modification unit and a media stream origination. The Session Description Protocol (SDP) carried by SIP signaling may be used to describe and negotiate the media components in each session. During set-up the UEs (and the media stream modification unit) may be associated with a SyncGroupId, which identifies the synchronization group the specific UE belongs to.

A synchronization group is a group of UE's that require to be synchronized with respect to one or more designated media streams. An example of such a group may be two UE's belonging to two different users on two different locations requesting to watch the same Content on Demand (movie) together in a synchronized manner.

Further, the UEs and the media stream modification unit, in particular the synchronization clients located therein, may use the RTP Control Protocol (RTCP) to transmit synchronization information to the IP address and port number associated with the MSAS and to receive RTCP reports from the MSAS on a an RTCP receiver port associated with an UE. In one embodiment, the synchronization client may include synchronization status information in its RTCP Receiver Reports (RTCP RR) using RTCP eXtended Reports (RTCP XR) and send this information in one or more RTCP messages to the MSAS.

In particular, a synchronization client may generate a specially formatted RTCP eXtended Report (RTCP XR) **516**,**518** comprising synchronization status information. This information may be in the form of RTP timestamps combined with NTP timestamps. The RTCP XR may further comprise the SSRC of source, the Packet Received NTP timestamp, the Packet Received RTP timestamp (RTP receipt time stamp) and, optionally, a SyncGroupId parameter. Further, it may comprise the Packet Presented NTP timestamp (NTP presentation time stamp) into the XR.

The SyncGroupId parameter may be implemented as a Session Description Protocol (SDP) session level attribute, e.g. a=RTCP-xr:sync-group=<value> or for example in the form of SDES PRIV items according to IETF RFC 3550. In a further embodiment, the RTCP-xr attribute field known from IETF RFC 3611 may be used.

The synchronization client associated with the media stream modification unit SC' reports synchronization correlation information to the MSAS. In contrast to the synchronization clients associated with the UEs, SC' transmits RTCP XRs associated with one or more media steams at the input of the transcoder and RTCP XRs associated with one or more media streams at the output of the transcoder. Generally, synchronization correlation information **520** is formed by two RTCP XRs, a first RTCP XR **522** associated with an input stream and a second RTCP XR **524** associated with an output steam (i.e. the modified input stream). Hence, the synchronization correlation information may comprise two sets of timestamps (RTP1,NTP1) and (RTP2,NTP2), one associated with an input stream and one associated with an output stream.

The MSAS may further send RTCP XRs comprising synchronization settings instructions to the synchronization clients SCa,SCb. These RTCP XRs may include the SSRC of source, the reference Packet Received NTP timestamp and the reference Packet Received RTP timestamp receipt time stamp. It may further comprise a reference Packet Presented NTP timestamp. These RTCP XRs may be both appended to RTCP Sender Reports (SRs) or may be received separately by an UE.

In one embodiment, a synchronization client may be co-located with the MSAS. In that case, the exchange of synchronization status information and synchronization settings instructions is internal to one or more functional entities of the MSAS in which they reside.

In another embodiment, the synchronization may relate the synchronization of one or more broadcast streams. In that case, the MSAS may function as a Feedback Target as described in more detail in RFC 3550. Before forwarding RTCP Receiver Reports, the MSAS may read and remove RTCP eXtended Reports containing synchronization status information. The MSAS may subsequently send synchronization settings instructions to the synchronization client using RTCP eXtended Reports.

In case of synchronization of Content on Demand or other unicast streams, the MSAS may forward RTCP Receiver Reports associated with one or more UEs to the appropriate media function MF. Before forwarding RTCP Receiver Reports, the MSAS may read and analyse the RTCP XR and remove those RTCP eXtended Reports containing synchronization status information. The MSAS may subsequently forward RTCP Sender Reports to the appropriate synchronization clients, appending synchronization settings instructions to the SC using RTCP eXtended Report. The MSAS may send synchronization settings instructions to the synchronization clients using a separate RTCP XR.

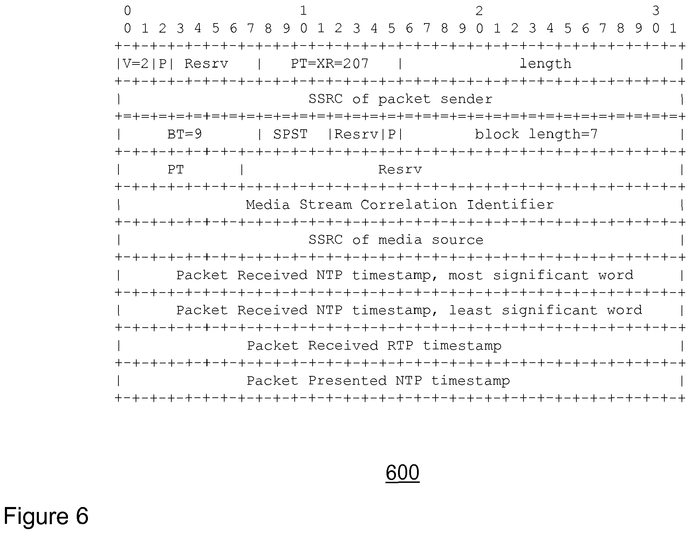

**Fig. 6** depicts an exemplary RTCP eXtended Report for reporting synchronization information on an RTP media stream according to one embodiment of the invention. The following fields in the synchronization RTCP XR may be used in the synchronization scheme according to the invention:
- An SSRC of packet sender identifying the sender of the specific RTCP packet.
- A Block Type (BT) field comprising 8 bits for identifying the block format.
- A Synchronisation Packet Sender Type (SPST) field comprising 4 bits for identifying the role of the packet sender for this specific eXtended Report.
- A Packet Presented NTP timestamp flag (P) which may be set to 1 if the Packet Presented NTP timestamp contains a value. If this flag is set to zero, then the Packet Presented NTP timestamp shall not be inspected.
- A Payload Type (PT) field comprising 7 bits for identifying the format of the media payload. The media payload may be associated with an RTP timestamp clock rate, which provides the time base for the RTP timestamp counter.
- A Media Stream Correlation Identifier (32 bits) for use in correlating synchronized media streams. If the RTCP Packet Sender is an SC or an MSAS (SPST=1 or SPST=2), then the Media Stream Correlation Identifier maps on the SyncGroupId. If the RTCP Packet Sender is an SC' (SPST=3 or SPST=4), related incoming and outgoing media streams may have the same Media Stream Correlation Identifier.
- An SSRC of media source (32 bits) may be set to the value of the SSRC identifier carried in the RTP header of the RTP packet to which the XR relates.
- A Packet Received NTP timestamp (64 bits) may represent the arrival time of the first octet of the RTP packet to which the XR relates.
- A Packet Received RTP timestamp (32 bits) is associated with the value of the RTP time stamp carried in the RTP header of the RTP packet to which the XR relates.
- A Packet Presented NTP timestamp (32 bits) reflects the NTP time when the data contained in the first octet of the associated RTP packet may be presented to the user. It comprises the least significant 16 bits of the NTP seconds part and the most significant 16 bits of the NTP fractional second part. If this field is empty, then it may be set to 0 and the Packet Presented NTP timestamp flag (P) may be set to 0.

Table 1 illustrates values associated with The Synchronisation Packet Sender Type (SPST) field:

**Table 1.**

| SPST value | Role of packet sender | Details |
|---|---|---|
| 0 | Reserved | For future use. |
| 1 | SC | The packet sender uses this XR to report synchronisation status information. Timestamps relate to the SC input. |
| 2 | MSAS | The packet sender uses this XR to report synchronisation settings instructions. Timestamps relate to the input of a virtual SC, which acts as reference to which the SCs connected to this MSAS are synchronized. |
| 3 | SC' input | The packet sender uses this XR to report synchronisation correlation information related to the incoming media stream of SC'. Timestamps relate to the SC' input. |
| 4 | SC'output | The packet sender uses this XR to report synchronisation correlation information related to the outgoing media stream of SC'. Timestamps relate to the SC' input. |
| 5-15 | Reserved | For future use. |

Using the specially formatted RTCP eXtended Reports as described with reference to **Fig. 6**, synchronization information may be efficiently signaled between clients in the network or one or more UEs and the MSAS. For example in the system depicted in **Fig. 5**, the synchronization clients SCa, SCb **504**,**506** associated with the UEs and the synchronization client SC' **510** associated with the media stream modification unit may use the RTCP XR to report synchronization information (i.e. synchronization status information or synchronization correlation information) to the MSAS. Table 2 provides an example of this information:

**Table 2**

| SCa reports on the first incoming media stream | SCb reports on second incoming media stream | SC' reports on the first incoming media stream and the second outgoing media stream |
|---|---|---|
| SSRC: SSRCa | SSRC: SSRCb | SSRC: SSRC1 |
| Clock rate: CRa | Clock rate: CRb | Clock rate: CR1 |
| NTP timestamp: NTPa | NTP timestamp: NTPb | NTP timestamp: NTP1 |
| RTP timestamp: RTPa | RTP timestamp: RTPb | RTP timestamp: RTP1 SSRC: SSRC2 |
| | | Clock rate: CR2 |
| | | NTP timestamp: NTP2 |
| | | RTP timestamp: RTP2 |

The media streams may be identified by their Synchronization Source (SSRC identifier): SSRCa=SSRC1 and SSRCb=SSRC2. This way, the MSAS may derive that SCa receives the first media stream and that SCb receives the second media stream. Further, each media stream may be associated with a specific clock rate, which may be expressed in Hz (i.e. clock ticks per second): CRa=CR1 and CRb=CR2. Typical clock rates are within the range between 8000 and 96000 samples per second for audio, and 90.000 samples per second for video.

In one embodiment the clock rate may be signaled to the MSAS. In other embodiments the rates are constant. In yet another embodiment, the Payload type instead of the clock rate may be signaled to the MSAS. The Payload Type may be mapped to a clock rate using e.g. schemes described in IETF RFC 3551. The information reported to the MSAS may further include both an RTP timestamps and NTP timestamps.

The SC' reports two sets of timestamps (RTP1,NTP1) and (RTP2,NTP2), one for each media stream, to the MSAS. NTP1 represents the time that the octet identified by RTP1 has passed the specific point in the SC' and NTP2 represents the time that the octet identified by RTP2 has passed the specific point in the SC'. These are typically different octets due to the transcoding and clock rate change. The SC' has to make a calculations to determine NTP1 and NTP2, in order to determine when the point in the content, represented by the identified octet, passes the specific point.

The MSAS may use the algorithm: Playout SCa - Playout SCb = (NTPa - (RTPa/CRa) - (NTPb - (RTPb/CRb) - (NTP1 - (RTP1/ CR1) + (NTP2 - (RTP2/CR2) to determine the difference between the play-out of SCa and SCb in miliseconds. The result may be used to instruct SCa or SCb to delay its play-out by the specified amount, in order to have their playouts sufficiently synchronized.

Using the parameters from example in table 3, results in a delay (Playout SCa - Playout SCb) of -5.493 seconds, indicating that SCb plays out 5.493 seconds later than SCa. Hence, on the basis of this calculation the MSAS may instruct SCa to delay its output by 5.493 seconds in order to become substantially synchronized.

**Table 3**

| Parameter | Value | Unit |
|---|---|---|
| CRa=CR1 | 96000 | Hz |
| CRb=CR2 | 8000 | Hz |
| NTPa | 3439700021.000 | Sec |
| RTPa | 1556688423 | Samples |
| NTPb | 3439700020.300 | Sec |
| RTPb | 3574215512 | Samples |
| NTP1 | 3439700022.500 | Sec |
| RTP1 | 1556333112 | Samples |
| NTP2 | 3439700021.000 | Sec |
| RTP2 | 3574223444 | Samples |

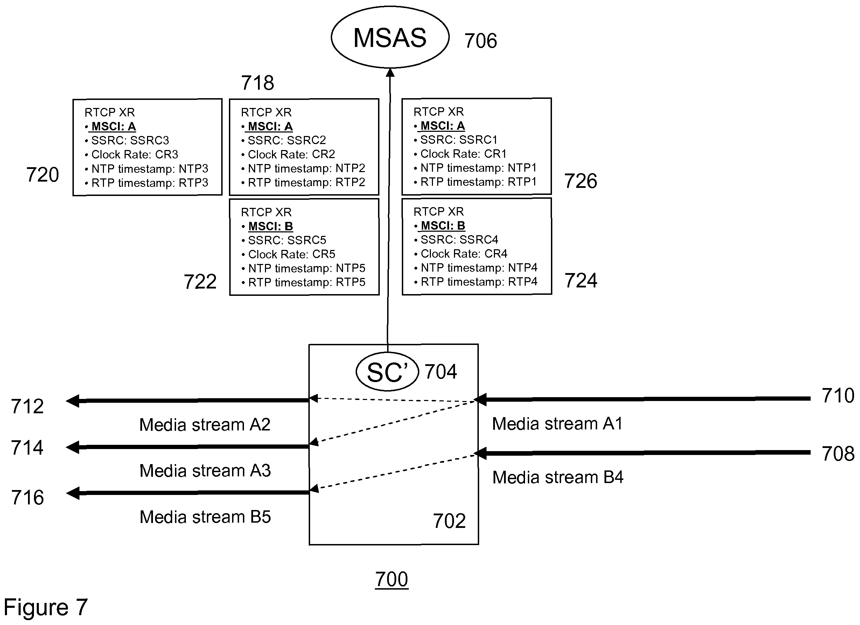

**Fig. 7** depicts the use of RTCP XR messages for synchronizing media stream according another embodiment of the invention. In this example, one single encoding device **702** may contain multiple media stream modification units. The encoding device may be associated with multiple incoming media streams **708,710** and outgoing media streams **712-716**, which may be synchronized by a single synchronization client SC' **704.**

For each incoming media stream A1,B4,... and for each outgoing media stream A2,A3,B5,... the synchronization client SC' may send an RTCP XRs **718-724** to the MSAS **706.** Hence, in this embodiment, the synchronization correlation information is sent in two RTCP XRs to the MSAS: a first RTCP XR **724**,**726** associated with the incoming media stream **708**,**710** and a second RTCP XR **718-722** associated with the outgoing media stream **712-716.**

Such signaling scheme has the advantage that the RTCP XRs may be sent independently at different times and at different rates to the MSAS. If one media steam has a more constant time reference, then its synchronization correlation information may be updated less regularly, hence saving processing time and bandwidth. Moreover, if one incoming media stream is transcoded into multiple different outgoing media streams, then the part of the synchronization correlation information related to the incoming media stream should be measured and sent only once thereby saving processing time and bandwidth.

However, sending the different parts (RTCP XRs) of the synchronization correlation information independently may pose a problem as the MSAS does not know which parts of the synchronization correlation information are related. In that case, it is not possible for the MSAS to determine which parts of the synchronization correlation information belong together.

For that reason, the synchronization client SC' generates a Media Stream Correlation Identifier (MSCI) in order to enable the MSAS to correlate the different media streams at the input and output of the transcoding device and to derive the correct synchronization correlation information from the different RTCP XRs received by the MSAS. For example, in **Fig. 7** the MSAS may use MSCIA to correlate RTCP XR **726** associated with media stream **710** with first RTCP XR **718** associated with (modified) media stream **712** and second RTCP XR **720** associated with (modified) media stream **714.** This way efficient synchronization of multiple modified media streams may be achieved. It is noted that synchronization between different related streams may not only be advantageous for different users using different play-out devices with different capabilities and wanting to experience the same broadcast at the same moment, it may also be beneficial for a single user switching between two or more networks transporting different related streams. This switching may occur for example when a user uses a mobile network with bad coverage. If a user looses his connection to that network he may want to switch to another network, e.g. another mobile network with improved coverage. An example of such network switching may be the switching between a DVB-H (Digital Video Broadcast - Handheld) network and an UMTS-network. The switching may also occur between a mobile network and a fixed network, for example when a user watching a video stream via a mobile network, comes home and wants to continue watching on his large-screen television connected to a fixed network. Canceling delays between different related streams may thus provide seamless network transitions and improved user experience.

Any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

For example, the synchronization method according to the invention may be implemented as a continuous process operating e.g. on a whole network or parts thereof, or operating on all streams running through the network or certain streams only. Further, the continuous operation may affect all synchronization points or only certain synchronization points. The method may be implemented by configuring the system to operate in this continuous modus.

Alternatively, the method may be implemented as a session-type synchronization process using e.g. a client-server type model. Synchronization sessions may for example be initiated or terminated through certain triggers within the network. Triggers for initiating or terminating a synchronization session may for instance be provided by synchronization points or by other elements within the network or system.

In an embodiment the synchronization server and synchronization client may be configured to initiate and terminate synchronization sessions. A synchronization session may be initiated when a synchronization client sends an invitation message to the synchronization server, or vice versa. During a synchronization session, the synchronization server and the synchronization client may exchange synchronization status information and synchronization settings instructions. A synchronization session may be terminated when the synchronization client sends a termination message to the synchronization server, or vice versa. A synchronization server and a synchronization client may send return messages to accept the invitation to, or to confirm the termination of a synchronization session.

## Claims

1. Method for enabling inter-destination synchronization of at least a first and at least a second stream, said second stream being associated with the output stream of a media stream modification unit using said first stream as an input stream, said media stream modification unit modifying timing information of said first stream, the method comprising the steps of:
- providing first arrival time information of a packet in the first stream arriving at a first synchronization point and second arrival time information of a packet in the second stream arriving at a second synchronization point to a synchronization unit for synchronizing said synchronization points, said synchronization unit connected to said first and said second synchronization point, wherein said arrival time information comprises an arrival time and timing information of the packet;
- providing, by the media stream modification unit, synchronization correlation information on the synchronicity relationship between said input stream and said output stream to said synchronization unit;
- said synchronization unit calculating delay information on the basis of the first and second arrival time information and the synchronization correlation information;
- said synchronization unit providing at least said first or second synchronization point with said delay information, enabling at least said first or second synchronization point to delay the output of a stream such that the first and second streams outputted by the first and second synchronization point respectively are synchronized.

2. Method according to claim 1 wherein said timing information of the packet is a timestamp.

3. Method according to claims 1 or 2, wherein the step of calculation delay information further comprises an adjustment step for adjusting the first and/or second arrival time information to achieve a common timeline between first arrival time information and second arrival time information, said adjustment step being based on at least part of the synchronization correlation information.

4. Method according to claim 3, wherein the adjustment step is executed by an arrival time information adjustment module, said module being part of the synchronization unit, the synchronization unit being provided with at least part of the synchronization correlation information.

5. Method according to claim 3, wherein the adjustment step is executed by at least one of the synchronization points, the at least one of the synchronization points comprising an arrival time information adjustment module, the arrival time information adjustment module being provided with at least part of the synchronization correlation information and the synchronization unit being provided with adjusted first and/or second arrival time information.

6. Method according to claim 3, wherein the adjustment step is executed in a network element, the network element being configured to receive arrival time information, the network element further comprising an arrival time information adjustment module, the arrival time information adjustment module being provided with at least part of the synchronization correlation information and the synchronization unit being provided with adjusted second arrival time information.

7. Method according to any of the preceding claims, wherein the synchronization point is a terminal, a network node, or an access node.

8. Method according to any of the preceding claims, wherein the synchronization unit is comprised in a synchronization point or a network node, preferably a synchronization server.

9. Method according to any of the preceding claims, wherein said arrival time information, said synchronization correlation information and/or said delay information is signaled in one or more RTCP messages, preferably one or more RTCP extended reports.

10. Method according to claim 9, wherein at least one of said RTCP messages comprises at least an identifier identifying the sender of the packet, an RTP timestamp, an NTP timestamp, a clock rate value and/or a media stream correlation identifier.

11. A synchronization unit for synchronizing the output of at least a first synchronization point receiving a first media stream and a second synchronization point receiving a second media stream, said second media stream being the output stream of a media stream modification unit using the first media stream as an input stream, the synchronization unit comprising:
- a first input for receiving first arrival time information associated with a packet in the first media stream, said first media stream being associated with a first synchronization point and second arrival time information of a packet in the second media stream arriving at a second synchronization point, wherein said arrival time information comprises an arrival time and timing information of the packet;
- a second input for receiving synchronization correlation information on the synchronicity relationship between said input stream and said output stream, said synchronization correlation information being provided by the stream modification unit; and,
- a processor for calculating delay information on the basis of the first and second arrival time information and the synchronization correlation information
- an output for sending at least one of the first and the second synchronization point with the delay information enabling one or more variable delay units in the first and second synchronization points to delay the output time of the received streams such that they are synchronized.

12. Synchronization unit according to claim 11 wherein the timing information of the packet is a timestamp.

13. A synchronization unit according to claims 11 or 12, wherein said arrival time information, said synchronization correlation information and/or said delay information is signaled in one or more RTCP messages, preferably one or more RTCP extended reports.

14. System for enabling inter-destination synchronization of the output of at least a first and a second synchronization point, the system comprising:
- a content delivery server for delivering a media stream;
- at least one synchronization unit according to any one of claims 11-13;
- a stream modification unit configured to modify timing information of an input media stream into a modified output media stream comprising modified timing information, and configured for providing synchronization correlation information on the synchronicity relationship between said input stream and said output stream to said synchronization unit.

15. A media stream modification unit for use in a system according to claim 14, the media stream modification unit comprising
- means for receiving a first media stream;
- means for modifying the first media stream into a second media stream, said means for modifying the first media stream also adapted to modify the timing information of the first stream;
- means for outputting said second media stream; wherein the media stream modification unit further comprises means to provide synchronization correlation information associated with the synchronicity relationship between the first media stream and the second media.

16. A computer program product comprising software code portions configured for, when run in the memory of a computer, executing the method steps as defined in any of claims 1-10.

## Patentansprüche

1. Verfahren zum Ermöglichen einer Zwischenzielsynchronisierung von zumindest einem ersten und zumindest einem zweiten Strom, wobei der zweite Strom mit dem Ausgangsstrom einer Medienstrommodifikationseinheit verbunden ist, die den ersten Strom als einen Eingangsstrom verwendet, wobei die Medienstrommodifikationseinheit Zeitsteuerungsinformationen des ersten Stroms modifiziert, das Verfahren umfassend die Schritte:
- Bereitstellen von ersten Ankunftszeitinformationen eines Pakets in dem ersten Strom, das an einem ersten Synchronisierungspunkt ankommt, und von zweiten Ankunftszeitinformationen eines Pakets in dem zweiten Strom, das an einem zweiten Synchronisierungspunkt ankommt, an eine Synchronisierungseinheit zum Synchronisieren der Synchronisierungspunkte, wobei die Synchronisierungseinheit mit dem ersten und dem zweiten Synchronisierungspunkt verbunden ist, wobei die Ankunftszeitinformationen eine Ankunftszeit und Zeitsteuerungsinformationen des Pakets umfassen;
- Bereitstellen, durch die Medienstrommodifikationseinheit, von Synchronisierungskorrelationsinformationen zu der Synchronitätsbeziehung zwischen dem Eingangsstrom und dem Ausgangsstrom an die Synchronisierungseinheit;
- wobei die Synchronisierungseinheit Verzögerungsinformationen auf Basis der ersten und der zweiten Ankunftszeitinformationen und der Synchronisierungskorrelationsinformationen berechnet;
- wobei die Synchronisierungseinheit zumindest dem ersten oder dem zweiten Synchronisierungspunkt die Verzögerungsinformationen bereitstellt, wodurch ermöglicht wird, dass zumindest der erste oder der zweite Synchronisierungspunkt den Ausgang eines Stroms derart verzögert, dass der erste und der zweite Strom, die durch den ersten bzw. den zweiten Synchronisierungspunkt ausgegeben werden, synchronisiert werden.

2. Verfahren nach Anspruch 1, wobei die Zeitsteuerungsinformationen des Pakets ein Zeitstempel sind.

3. Verfahren nach Anspruch 1 oder 2, wobei der Schritt des Berechnens von Verzögerungsinformationen ferner einen Einstellungsschritt zum Einstellen der ersten und/oder der zweiten Ankunftszeitinformationen umfasst, um eine gemeinsame Zeitleiste zwischen ersten Ankunftszeitinformationen und zweiten Ankunftszeitinformationen zu erreichen, wobei der Einstellungsschritt auf zumindest einem Teil der Synchronisierungskorrelationsinformationen basiert.

4. Verfahren nach Anspruch 3, wobei der Einstellungsschritt durch ein Ankunftszeitinformationeneinstellungsmodul ausgeführt wird, wobei das Modul ein Teil der Synchronisierungseinheit ist, wobei der Synchronisierungseinheit zumindest ein Teil der Synchronisierungskorrelationsinformationen bereitgestellt wird.

5. Verfahren nach Anspruch 3, wobei der Einstellungsschritt durch zumindest einen der Synchronisierungspunkte ausgeführt wird, der zumindest eine der Synchronisierungspunkte umfassend ein Ankunftszeitinformationeneinstellungsmodul, wobei dem Ankunftszeitinformationeneinstellungsmodul zumindest ein Teil der Synchronisierungskorrelationsinformationen bereitgestellt wird und der Synchronisierungseinheit eingestellte erste und/oder zweite Ankunftszeitinformationen bereitgestellt werden.

6. Verfahren nach Anspruch 3, wobei der Einstellungsschritt in einem Netzwerkelement ausgeführt wird, wobei das Netzwerkelement dazu ausgelegt ist, Ankunftszeitinformationen zu empfangen, das Netzwerkelement ferner umfassend ein Ankunftszeitinformationeneinstellungsmodul, wobei dem Ankunftszeitinformationeneinstellungsmodul zumindest ein Teil der Synchronisierungskorrelationsinformationen bereitgestellt wird und der Synchronisierungseinheit eingestellte zweite Ankunftszeitinformationen bereitgestellt werden.

7. Verfahren nach einem der vorstehenden Ansprüche, wobei der Synchronisierungspunkt ein Endgerät, ein Netzwerkknoten oder ein Zugangsknoten ist.

8. Verfahren nach einem der vorstehenden Ansprüche, wobei die Synchronisierungseinheit in einem Synchronisierungspunkt oder einem Netzwerkknoten, vorzugsweise einem Synchronisierungsserver, enthalten ist.

9. Verfahren nach einem der vorstehenden Ansprüche, wobei die Ankunftszeitinformationen, die Synchronisierungskorrelationsinformationen und/oder die Verzögerungsinformationen in einer oder mehreren RTCP-Nachrichten, vorzugsweise einem oder mehreren erweiterten RTCP-Berichten, signalisiert werden.

10. Verfahren nach Anspruch 9, wobei zumindest eine der RTCP-Nachrichten zumindest einen Identifikator, der den Sender des Pakets identifiziert, einen RTP-Zeitstempel, einen NTP-Zeitstempel, einen Taktratenwert und/oder einen Medienstromkorrelationsidentifikator umfasst.

11. Synchronisierungseinheit zum Synchronisieren des Ausgangs von zumindest einem ersten Synchronisierungspunkt, der einen ersten Medienstrom empfängt, und einem zweiten Synchronisierungspunkt, der einen zweiten Medienstrom empfängt, wobei der zweite Medienstrom der Ausgangsstrom einer Medienstrommodifikationseinheit ist, die den ersten Medienstrom als einen Eingangsstrom verwendet, die Synchronisierungseinheit umfassend:
- einen ersten Eingang zum Empfangen von ersten Ankunftszeitinformationen, die mit einem Paket in dem ersten Medienstrom verbunden sind, wobei der erste Medienstrom mit einem ersten Synchronisierungspunkt verbunden ist, und zweiten Ankunftszeitinformationen eines Pakets in dem zweiten Medienstrom, das an einem zweiten Synchronisierungspunkt ankommt, wobei die Ankunftszeitinformationen eine Ankunftszeit und Zeitsteuerungsinformationen des Pakets umfassen;
- einen zweiten Eingang zum Empfangen von Synchronisierungskorrelationsinformationen zu der Synchronitätsbeziehung zwischen dem Eingangsstrom und dem Ausgangsstrom, wobei die Synchronisierungskorrelationsinformationen durch die Strommodifikationseinheit bereitgestellt werden; und
- einen Prozessor zum Berechnen von Verzögerungsinformationen auf Basis der ersten und der zweiten Ankunftszeitinformationen und der Synchronisierungskorrelationsinformationen;
- einen Ausgang zum Senden von zumindest einem von dem ersten und dem zweiten Synchronisierungspunkt mit den Verzögerungsinformationen, wodurch ermöglicht wird, dass eine oder mehrere Einheiten zur variablen Verzögerung in dem ersten und dem zweiten Synchronisierungspunkt die Ausgangszeit der empfangenen Ströme derart verzögern, dass sie synchronisiert werden.

12. Synchronisierungseinheit nach Anspruch 11, wobei die Zeitsteuerungsinformationen des Pakets ein Zeitstempel sind.

13. Synchronisierungseinheit nach Anspruch 11 oder 12, wobei die Ankunftszeitinformationen, die Synchronisierungskorrelationsinformationen und/oder die Verzögerungsinformationen in einer oder mehreren RTCP-Nachrichten, vorzugsweise einem oder mehreren erweiterten RTCP-Berichten, signalisiert werden.

14. System zum Ermöglichen einer Zwischenzielsynchronisierung des Ausgangs von zumindest einem ersten und einem zweiten Synchronisierungspunkt, das System umfassend:
- einen Inhaltslieferungsserver zum Liefern eines Medienstroms;
- zumindest eine Synchronisierungseinheit nach einem der Ansprüche 11-13;
- eine Strommodifikationseinheit, die dazu ausgelegt ist, Zeitsteuerungsinformationen eines Eingangsmedienstroms in einen modifizierten Ausgangsmedienstrom, umfassend modifizierte Zeitsteuerungsinformationen, zu modifizieren, und die dazu ausgelegt ist, Synchronisierungskorrelationsinformationen zu der Synchronitätsbeziehung zwischen dem Eingangsstrom und dem Ausgangsstrom an die Synchronisierungseinheit bereitzustellen.

15. Medienstrommodifikationseinheit zur Verwendung in einem System nach Anspruch 14, die Medienstrommodifikationseinheit umfassend
- ein Mittel zum Empfangen eines ersten Medienstroms;
- ein Mittel zum Modifizieren des ersten Medienstroms in einen zweiten Medienstrom, wobei das Mittel zum Modifizieren des ersten Medienstroms außerdem konzipiert ist, um die Zeitsteuerungsinformationen des ersten Stroms zu modifizieren;
- ein Mittel zum Ausgeben des zweiten Medienstroms; wobei die Medienstrommodifikationseinheit ferner ein Mittel zum Bereitstellen von Synchronisierungskorrelationsinformationen, die mit der Synchronitätsbeziehung zwischen dem ersten Medienstrom und den zweiten Medien verbunden sind, umfasst.

16. Computerprogrammprodukt, umfassend Softwarecodeabschnitte, die dazu ausgelegt sind, bei Ausführung in dem Speicher eines Computers, die Verfahrensschritte nach einem der Ansprüche 1-10 auszuführen.

## Revendications

1. Procédé pour permettre la synchronisation inter-destination d'au moins un premier second flux et au moins un second flux, ledit second flux étant associé au flux de sortie d'une unité de modification de flux multimédia utilisant ledit premier flux comme flux d'entrée, ladite unité de modification de flux multimédia modifiant les informations de synchronisation dudit premier flux, le procédé comprenant :
- de fournir des premières informations d'heure d'arrivée d'un paquet dans le premier flux arrivant à un premier point de synchronisation et des secondes informations d'heure d'arrivée d'un paquet dans le second flux arrivant à un second point de synchronisation à une unité de synchronisation pour synchroniser lesdits points de synchronisation, ladite unité de synchronisation étant connectée auxdits premier et second points de synchronisation, où lesdites informations d'heure d'arrivée comprennent une heure d'arrivée et des informations de synchronisation du paquet ;
- de fournir, par l'unité de modification de flux multimédia, des informations de corrélation de synchronisation sur la relation de synchronicité entre ledit flux d'entrée et ledit flux de sortie à ladite unité de synchronisation ;
- ladite unité de synchronisation calculant les informations de retard sur la base des premières et secondes informations d'heure d'arrivée et des informations de corrélation de synchronisation ;
- ladite unité de synchronisation fournissant au moins audit premier point de synchronisation ou audit second point de synchronisation lesdites informations de retard, permettant au moins audit premier point de synchronisation ou audit second point de synchronisation de retarder la sortie d'un flux de manière à ce que les premier et second flux délivrés en sortie par les premier et second points de synchronisation soient respectivement synchronisés.

2. Procédé selon la revendication 1, dans lequel lesdites informations de synchronisation du paquet sont un horodatage.

3. Procédé selon la revendication 1 ou la revendication 2, dans lequel l'étape de calcul des informations de retard comprend en outre une étape d'ajustement pour ajuster les premières et/ou les secondes informations d'heure d'arrivée afin d'obtenir une chronologie commune entre les premières informations d'heure d'arrivée et les secondes informations d'heure d'arrivée, ladite étape d'ajustement étant basée sur au moins une partie des informations de corrélation de synchronisation.

4. Procédé selon la revendication 3, dans lequel l'étape d'ajustement est exécutée par un module d'ajustement d'informations d'heure d'arrivée, ledit module faisant partie de l'unité de synchronisation, l'unité de synchronisation étant pourvue d'au moins une partie des informations de corrélation de synchronisation.

5. Procédé selon la revendication 3, dans lequel l'étape d'ajustement est exécutée par au moins un des points de synchronisation, l'au moins un des points de synchronisation comprenant un module d'ajustement d'informations d'heure d'arrivée, le module d'ajustement d'informations d'heure d'arrivée étant pourvu d'au moins une partie des informations de corrélation de synchronisation, et l'unité de synchronisation étant pourvue des premières et/ou secondes informations d'heure d'arrivée ajustées.

6. Procédé selon la revendication 3, dans lequel l'étape d'ajustement est exécutée dans un élément de réseau, l'élément de réseau étant configuré pour recevoir des informations d'heure d'arrivée, l'élément de réseau comprenant en outre un module d'ajustement d'informations d'heure d'arrivée, le module d'ajustement d'informations d'heure d'arrivée étant pourvu d'au moins une partie des informations de corrélation de synchronisation, et l'unité de synchronisation étant pourvue des secondes informations d'heure d'arrivée ajustées.

7. Procédé selon l'une quelconque des revendications précédentes, dans lequel le point de synchronisation est un terminal, un nœud de réseau ou un nœud d'accès.

8. Procédé selon l'une quelconque des revendications précédentes, dans lequel l'unité de synchronisation est comprise dans un point de synchronisation ou un nœud de réseau, de préférence un serveur de synchronisation.

9. Procédé selon l'une quelconque des revendications précédentes, dans lequel lesdites informations d'heure d'arrivée, lesdites informations de corrélation de synchronisation et/ou lesdites informations de retard sont signalées dans un ou plusieurs messages RTCP, de préférence dans un ou plusieurs rapports RTCP étendus.

10. Procédé selon la revendication 9, dans lequel au moins un desdits messages RTCP comprend au moins un identificateur identifiant l'expéditeur du paquet, un horodatage RTP, un horodatage NTP, une valeur de fréquence d'horloge et/ou un identificateur de corrélation de flux multimédia.

11. Unité de synchronisation pour synchroniser la sortie d'au moins un premier point de synchronisation recevant un premier flux multimédia et un second point de synchronisation recevant un second flux multimédia, ledit second flux multimédia étant le flux de sortie d'une unité de modification de flux multimédia utilisant le premier flux multimédia comme flux d'entrée, l'unité de synchronisation comprenant :
- une première entrée pour recevoir des premières informations d'heure d'arrivée associées à un paquet dans le premier flux multimédia, ledit premier flux multimédia étant associé à un premier point de synchronisation et des secondes informations d'heure d'arrivée d'un paquet dans le second flux multimédia arrivant à un second point de synchronisation, où lesdites informations d'heure d'arrivée comprennent une heure d'arrivée et des informations de timing du paquet ;
- une seconde entrée pour recevoir des informations de corrélation de synchronisation sur la relation de synchronicité entre ledit flux d'entrée et ledit flux de sortie, lesdites informations de corrélation de synchronisation étant fournies par l'unité de modification de flux ; et
- un processeur pour calculer des informations de retard sur la base des premières et des secondes informations d'heure d'arrivée et des informations de corrélation de synchronisation ;
- une sortie pour envoyer, à au moins un des premier et second points de synchronisation, les informations de retard permettant à une ou plusieurs unités de retard variable, dans les premier et second points de synchronisation, de retarder le moment de sortie des flux reçus de manière à ce qu'ils soient synchronisés.

12. Unité de synchronisation selon la revendication 11, dans laquelle les informations de retard du paquet sont un horodatage.

13. Unité de synchronisation selon la revendication 11 ou la revendication 12, dans laquelle lesdites informations d'heure d'arrivée, lesdites informations de corrélation de synchronisation et/ou lesdites informations de retard sont signalées dans un ou plusieurs messages RTCP, de préférence dans un ou plusieurs rapports RTCP étendus.

14. Système pour permettre la synchronisation inter-destination de la sortie d'au moins un premier point de synchronisation et un second point de synchronisation, le système comprenant :
- un serveur de distribution de contenu pour distribuer un flux multimédia ;
- au moins une unité de synchronisation selon l'une quelconque des revendications 11 à 13 ;
- une unité de modification de flux configurée pour modifier les informations de timing d'un flux multimédia d'entrée en un flux multimédia de sortie modifié comprenant des informations de timing modifiées, et configurée pour fournir des informations de corrélation de synchronisation sur la relation de synchronicité entre ledit flux d'entrée et ledit flux de sortie à ladite unité de synchronisation.

15. Unité de modification de flux multimédia destinée à être utilisée dans un système selon la revendication 14, l'unité de modification de flux multimédia comprenant :
- des moyens pour recevoir un premier flux multimédia ;
- des moyens pour modifier le premier flux multimédia en un second flux multimédia, lesdits moyens pour modifier le premier flux multimédia étant également adaptés pour modifier les informations de timing du premier flux ;
- des moyens pour délivrer en sortie ledit second flux multimédia ;
où l'unité de modification de flux multimédia comprend en outre des moyens pour fournir des informations de corrélation de synchronisation associées à la relation de synchronicité entre le premier flux multimédia et le second flux multimédia.

16. Produit programme informatique comprenant des parties de code logiciel configurées pour, lorsqu'elles sont exécutées dans la mémoire d'un ordinateur, exécuter les étapes de procédé telles que définies dans l'une quelconque des revendications 1 à 10.
